# FASCICULE DE BREVET EUROPEEN

(11) **EP 0 810 782 B1**
(45) Date de publication et mention de la délivrance du brevet: **10.10.2001**
(21) Numéro de dépôt: 97410057.0
(22) Date de dépôt: 28.05.1997
(51) Int. Cl.: H04N 5/44

(54) **Régulation de flux de signaux de télévision numériques**
Datenflussregelung für digitale Fernsehsignale
Stream control for digital television signals

(30) Priorité: 29.05.1996 FR 9606830
(43) Date de publication de la demande: 03.12.1997
(73) Titulaire: STMicroelectronics S.A., 94250 Gentilly (FR)
(72) Inventeur: Imbert, Michel, Coublevie, 38500 Voiron (FR); Volmier, Serge, 38920 Crolles (FR); Cauchy, Xavier, 38240 Meylan (FR)
(74) Mandataire: de Beaumont, Michel

(56) Documents cités:
- DE-A- 3 543 310
- FR-A- 2 693 865
- US-A- 4 027 100
- US-A- 5 473 385
- KINOSHITA ET AL: "synchronization and multiplexing of HDTV signals for transmission in broadband ISDN" ELECTRONICS & COMMUNICATIONS IN JAPAN, PART I - COMMUNICATIONS, vol. 75, no. 2, février 1992, NEW YORK US, pages 11-23, XP000311074

## Description

La présente invention concerne la conversion de signaux numériques de télévision codés selon une norme MPEG en signaux vidéo analogiques normalisés (PAL, SECAM ou NTSC).

Les sources de signaux de télévision sont de plus en plus souvent numériques, qu'il s'agisse de réseaux câblés, de transmissions par satellite, de disques numériques de stockage vidéo, etc. De telles sources nécessitent un dispositif de conversion pour adapter les signaux numériques aux entrées normalisées d'un téléviseur qui sont prévues pour recevoir des signaux analogiques normalisés.

La transmission de signaux de télévision numériques fait généralement appel à une compression de données, côté émission, pour limiter la quantité de données à transmettre. Les informations sont compressées selon une norme établie (MPEG), avant transmission. Cela nécessite que les informations soient décompressées, côté réception, par le dispositif d'interface, préalablement à la conversion du flux d'images numériques en un flux d'images analogiques.

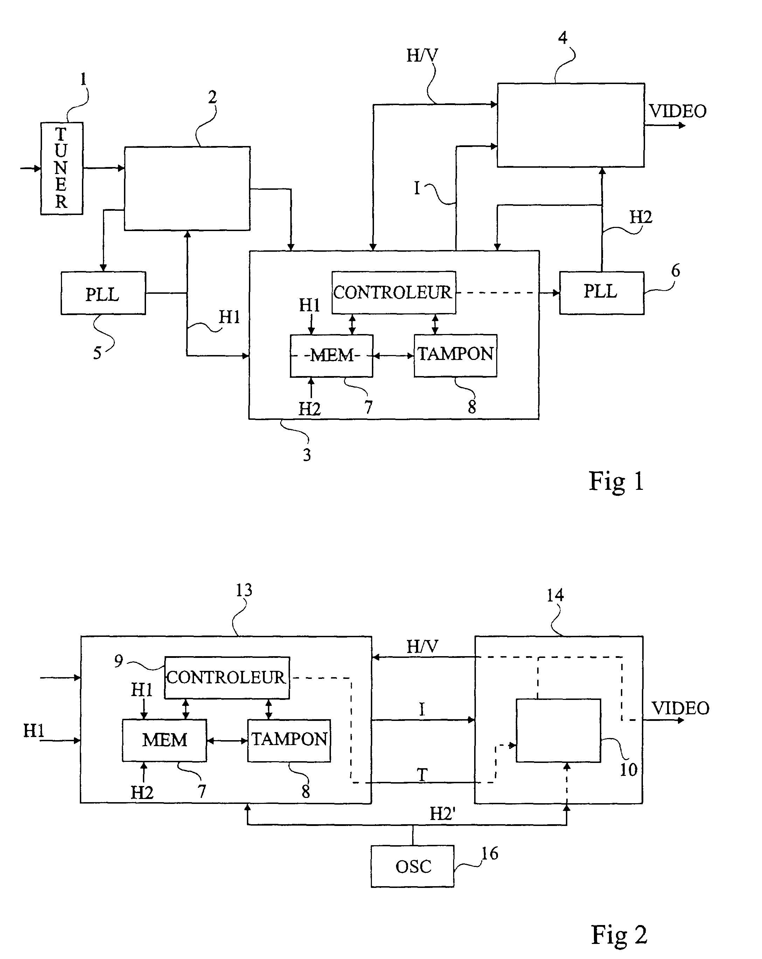

La figure 1 représente, sous forme de schéma-bloc, un exemple de circuit classique de réception de signaux de télévision numériques et de conversion en signaux vidéo analogiques.

En entrée, le circuit représenté à la figure 1 comporte un syntonisateur (TUNER) 1 chargé notamment de sélectionner un canal parmi plusieurs canaux transmis, par exemple, par un réseau câblé (non représenté). Les signaux de télévision numériques correspondant au canal sélectionné sont envoyés à un circuit dit "d'acquisition" 2 destiné, en particulier, à extraire du flux de données numériques une fréquence d'horloge correspondant au rythme de la transmission. Le circuit 2 délivre les signaux de télévision numériques à un circuit de décompression 3 destiné à décompresser les données codées selon une norme MPEG. Le circuit 3 délivre un flux numérique d'images I dans leur ordre d'affichage à un module d'encodage 4 chargé de coder ce flux I selon une norme PAL, SECAM ou NTSC et de restituer toutes les composantes du signal vidéo et, notamment, les signaux de synchronisation horizontale et verticale. Le module 4 est généralement associé à des convertisseurs numériques/analogiques (non représentés) qui délivrent des signaux vidéo analogiques, par exemple, des signaux de chrominance et de luminance ou un signal vidéo composite.

Un problème qui se pose dans un tel circuit de conversion est de réguler le flux de données vidéo sortant du module 4 par rapport au flux de données entrant provenant du canal de transmission, afin de permettre une restitution correcte des images, par exemple sur un poste de télévision (non représenté).

Pour ce faire, on utilise généralement deux générateurs d'horloge à boucle de verrouillage de phase (PLL) 5 et 6. Un premier générateur 5 est destiné à générer un signal d'horloge H1 à partir du flux de données reçu du canal de transmission. Ce générateur 5 génère le signal d'horloge du système avant décompression pour récupérer les données reçues et commander la décompression opérée par le circuit 3 au rythme de la réception.

Un deuxième générateur 6 génère un signal d'horloge H2 destiné aux données après décompression. Ce signal d'horloge H2 sert à la fois au module d'encodage 4 et à l'extraction des données du circuit de décompression 3 au rythme de l'affichage.

Le circuit de décompression 3 comporte généralement une mémoire de trame 7 qui contient des demi-images de télévision. Ces images sont chargées en mémoire au rythme de l'horloge H1, puis modifiées par des algorithmes de décompression, et lues au rythme de l'horloge H2 pour être transmises sous la forme du flux d'images I au module 4. Deux zones mémoire sont généralement utilisées alternativement en lecture et en écriture, une première zone étant en écriture pour stocker les images décodées pendant qu'une deuxième zone est lue pour envoyer les images au module 4. La mémoire 7 est généralement associée à une mémoire dite "tampon" 8 pour permettre de réguler le flux des données lorsque les flux de lecture et d'écriture dans les zones de la mémoire 7 ne sont pas équilibrés. Les mémoires 7 et 8 sont associées à un contrôleur 9 dont le rôle est d'organiser les lectures et écritures dans les différentes mémoires 7 et 8.

Le contrôleur 9 surveille le taux de remplissage de la mémoire tampon 8 pour contrôler l'horloge de lecture H2 des mémoires 7 et, par ce biais, contrôler la base de temps (non représentée) du module 4 qui génère les signaux de synchronisation compris dans les signaux vidéo et qui utilise cette même horloge H2 comme référence de temps. Les signaux de synchronisation horizontale H et verticale V issus du circuit 4 sont également envoyés au circuit 3 pour réguler la lecture dans les zones mémoire 7.

Un inconvénient d'un circuit classique, tel que représenté à la figure 1, réside dans le recours nécessaire à deux boucles à verrouillage de phase de génération d'horloge, ce qui accroît le coût du circuit.

Un autre inconvénient est que, si le signal d'horloge H2 de lecture est modifié par la PLL 6 pour réguler le flux, la sous-porteuse de chrominance contenue dans le signal vidéo composite délivré par le module 4 est, elle aussi, modifiée, dans la mesure où elle dépend de l'horloge H2 qu'elle utilise comme référence de temps.

La présente invention vise à pallier les inconvénients des circuits classiques en proposant un nouveau système de régulation des flux de données qui rend l'horloge, servant de référence de temps à la génération des signaux de synchronisation horizontale et verticale, indépendante d'un éventuel déséquilibre entre les flux de données.

La présente invention vise également à proposer un système de régulation comportant une seule boucle de verrouillage de phase d'horloge.

Pour atteindre ces objets, la présente invention prévoit un procédé de régulation en lecture de zones mémoire d'un circuit de décompression d'un flux de données vidéo compressé selon une norme MPEG, par rapport au débit d'écriture dudit flux de données compressées dans lesdites zones mémoire, ledit circuit de décompression délivrant un flux de données image au rythme de signaux de synchronisation horizontale et verticale des images délivrées par un circuit d'encodage selon une norme analogique de télévision couleur, ledit procédé consistant à générer un signal d'horloge de fréquence fixe destiné à la lecture desdites zones mémoire et à la génération desdits signaux de synchronisation horizontale et verticale, et à décaler l'apparition d'un front déclencheur dudit signal de synchronisation verticale sur la base d'un signal indicateur de l'état de remplissage d'une mémoire tampon associée auxdites zones mémoire.

Selon un mode de réalisation de la présente invention, ledit décalage correspond à un multiple pair de la période dudit signal de synchronisation horizontale.

Selon un mode de réalisation de la présente invention, ledit décalage correspond à deux périodes dudit signal de synchronisation horizontale.

Selon un mode de réalisation de la présente invention, le procédé de régulation consiste à retarder ledit signal de synchronisation verticale lorsque ledit signal indicateur de l'état de la mémoire tampon signale que cette dernière est vide, et à avancer ledit signal de synchronisation verticale lorsque ledit signal indicateur de l'état de la mémoire tampon indique que cette dernière est pleine.

La présente invention concerne également un circuit de conversion de signaux de télévision numériques compressés selon une norme MPEG en signaux vidéo analogiques normalisés (PAL, SECAM, NTSC), comportant un circuit de décompression MPEG recevant un flux de données numériques au rythme d'un premier signal d'horloge asservi sur le débit desdits signaux numériques et comportant des zones mémoire alternativement affectées en lecture et en écriture et associées à une mémoire tampon, un circuit d'encodage d'un flux de données numériques délivré par ledit circuit de décompression au rythme de signaux de synchronisation horizontale et verticale d'un balayage d'écran de téléviseur, des moyens pour générer un deuxième signal d'horloge de fréquence fixe constituant une horloge de lecture desdites zones mémoire et une horloge de référence pour un générateur desdits signaux de synchronisation, et des moyens pour décaler l'apparition d'un front déclencheur dudit signal de synchronisation verticale sur la base de l'état d'un signal indicateur du taux de remplissage de ladite mémoire tampon.

Selon un mode de réalisation de la présente invention, ledit deuxième signal d'horloge est fourni par un oscillateur à quartz dont la fréquence nominale est la même que celle d'un quartz servant à générer ledit premier signal d'horloge.

Selon un mode de réalisation de la présente invention, ledit générateur de signaux de synchronisation comporte des moyens pour décaler l'apparition d'un signal de synchronisation verticale d'un nombre pair de périodes du signal de synchronisation horizontale.

Selon un mode de réalisation de la présente invention, ladite période de décalage du signal de synchronisation verticale correspond au double de la période du signal de synchronisation horizontale.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment est destinée à exposer l'état de la technique et le problème posé ;
la figure 2 représente, sous forme de schéma-bloc, un mode de réalisation d'un circuit d'adaptation selon la présente invention ; et
les figures 3A à 3F illustrent le procédé de régulation de flux selon la présente invention.

Pour des raisons de clarté, les mêmes éléments ont été désignés par les mêmes références aux différentes figures. Pour les mêmes raisons, seuls les éléments nécessaires à la compréhension de l'invention ont été exposés aux figures.

Une caractéristique de la présente invention est de générer un signal d'horloge fixe H2', servant d'horloge de lecture d'une mémoire d'un circuit de décompression et d'horloge de référence à la génération de signaux de synchronisation horizontale et verticale de signaux vidéo analogiques.

Selon l'invention, un circuit de conversion de signaux numériques codés selon une norme MPEG en signaux codés selon une norme PAL, SECAM ou NTSC de télévision couleur comporte, comme précédemment, un syntonisateur, un circuit d'acquisition, un générateur d'un premier signal d'horloge H1 associé à une boucle de verrouillage de phase, un circuit 13 de décompression de données codées selon une norme MPEG et un circuit d'encodage 14 délivrant des signaux vidéo normalisés. A la figure 2, seuls les circuits de décompression 13 et d'encodage 14 ont été représentés, les autres éléments cités ci-dessus étant identiques à ceux décrits en relation avec la figure 1.

Selon la présente invention, le générateur d'horloge 6 (figure 1), pourvu d'une boucle à verrouillage de phase, est remplacé par un oscillateur (OSC) 16 à fréquence fixe. Cet oscillateur 16 délivre un deuxième signal d'horloge H2', à la fois au circuit de décompression 13, pour servir d'horloge de lecture d'une zone de la mémoire 7, et au circuit d'encodage 14, pour servir de référence temporelle à un générateur 10 de signaux de synchronisation horizontale et verticale.

Le fonctionnement du circuit de décompression 13 est identique à celui du circuit 3 décrit en relation avec la figure 1, à la différence près que l'horloge de lecture H2' est désormais fixe.

Côté circuit d'encodage 14, la seule différence par rapport au circuit 4, décrit en relation avec la figure 1, réside dans le générateur 10 des signaux de synchronisation horizontale et verticale.

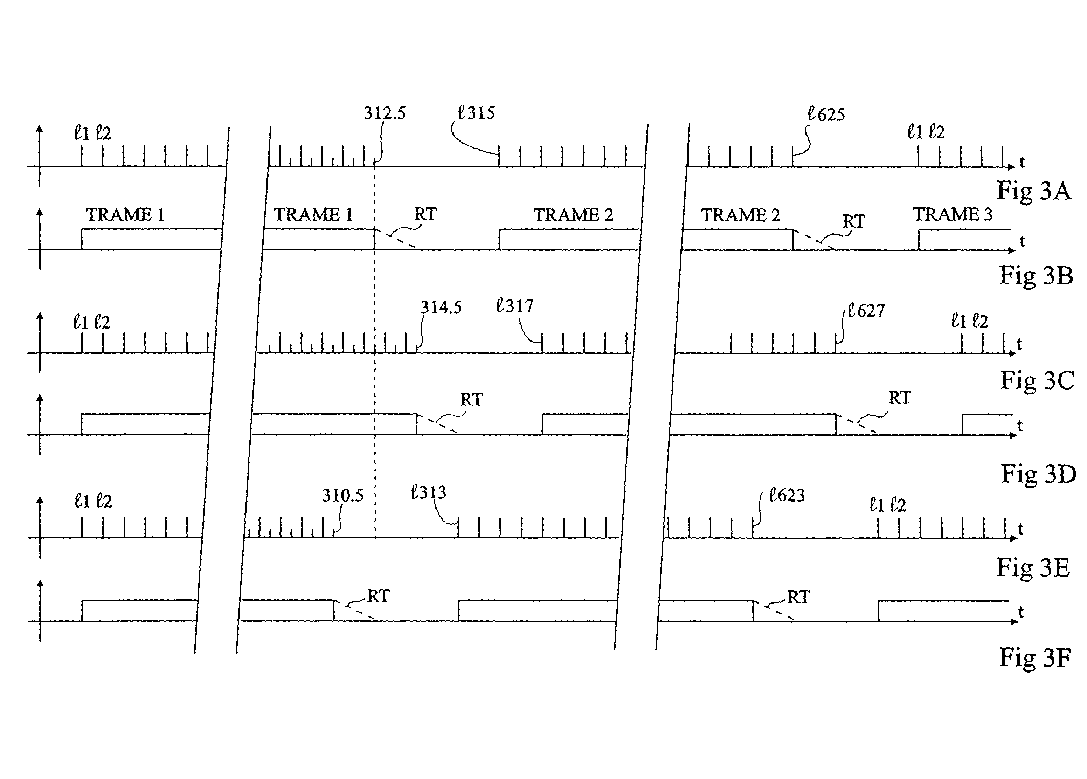

Le fonctionnement du circuit de conversion selon la présente invention, tel que représenté à la figure 2, sera décrit par la suite en relation avec les figures 3A à 3F.

Les figures 3A, 3C et 3E, respectivement 3B, 3D et 3F, représentent, sous forme de chronogrammes, des exemples de signaux de synchronisation, respectivement horizontale H et verticale V, générés par le générateur 10 selon la présente invention pour un fonctionnement selon la norme PAL BG.

Une caractéristique de l'invention est d'utiliser une période correspondant au retour physique du faisceau de balayage, de la dernière ligne à la première ligne, et pendant laquelle il n'y a pas de données vidéo dans les signaux vidéo délivrés par le circuit 14.

Cette période dite de "retour trame" est déclenchée par un front descendant du signal de synchronisation verticale V, le début de la trame suivante (front montant du signal V) se produisant après une période fixe et normalisée qui suit ce front descendant (par exemple, l'équivalent de six périodes de ligne).

Selon l'invention, on utilise cette période de "retour trame" pour rattraper d'éventuels décalages entre les flux d'écriture et de lecture dans des zones de la mémoire 7 du circuit de décompression 13.

La lecture de la mémoire 7 est esclave des signaux de synchronisation horizontale et verticale générés par le circuit 14 et est pilotée par l'horloge H2' qui génère ces signaux de synchronisation. Tous ces signaux (H2', H, V) sont donc synchrones et le circuit 14 se comporte comme un circuit maître vis-à-vis du circuit de décompression 13 et, notamment de la zone de la mémoire qui est utilisée en lecture (zone de sortie). Le circuit 14 commande donc, à son propre rythme (imposé par la norme d'encodage PAL, SECAM ou NTSC), les données vidéo qu'il encode et superpose aux signaux de synchronisation horizontale et verticale pour constituer le signal de vidéo composite VIDÉO qu'il délivre à ce même rythme.

Tant que la mémoire tampon 8 fonctionne normalement, c'est-à-dire tant que cette mémoire n'est ni pleine, ni vide, le front descendant du signal V (figure 3B) se produit après un nombre de lignes (figure 3A) normalisé (312,5 ou 625 en PAL et en SECAM, 262,5 ou 525 en NTSC) qui suit un front montant. L'affichage s'effectue de manière entrelacée et les instants correspondant aux demi-lignes ont été représentés par des traits courts par rapport aux fronts du signal H. Le retour trame RT a été symbolisé par un trait en pointillés.

En supposant que l'horloge H2' est plus rapide que l'horloge H1 fixée par le rythme du débit du canal de transmission, la mémoire tampon 8 du circuit 13 va se vider au bout d'un certain temps.

Lorsque la mémoire tampon 8 est vide en raison du décalage entre les horloges H2' et H1, le circuit 13 envoie un signal T indicateur de cet état au générateur 10. Lorsqu'il reçoit un tel signal, le générateur 10 va retarder le rythme de lecture de la mémoire 7 en retardant le signal de synchronisation verticale (figures 3C et 3D). Selon l'invention, on retarde l'apparition du front descendant du signal de synchronisation verticale par rapport à une trame normalisée en augmentant le nombre de lignes de la trame. Ce décalage ne doit cependant perturber ni le balayage du faisceau, ni le décodage des signaux de chrominance, l'affichage s'effectuant de manière entrelacée. Pour ce faire, on retarde le front du signal de synchronisation verticale d'une période correspondant à la durée d'un nombre pair (par exemple deux) de lignes de balayage à la fin de la trame courante, c'est-à-dire que son front descendant intervient à la ligne 314,5 selon la norme PAL (figure 3D) ou 264,5, selon la norme NTSC. Ainsi, au niveau du balayage, le rappel vertical du faisceau se produit 128 µs plus tard par rapport à une trame normalisée (figure 3B).

On laisse ainsi deux périodes de ligne au circuit 13 pour décompresser des données avant de basculer les zones mémoires de lecture en écriture, et inversement.

A l'inverse, si la fréquence du signal d'horloge H2' est inférieure à la fréquence du signal d'horloge H1, la mémoire tampon 8 a tendance à déborder et il faut alors supprimer des lignes pour équilibrer le flux. Selon l'invention, le signal de synchronisation verticale V est alors avancé d'une durée correspondant à deux lignes de balayage par le générateur 10 lorsqu'il reçoit un signal T en ce sens (figures 3E et 3F). Le rappel en vertical du faisceau se produit alors plus tôt que pour un signal normalisé (figure 3B).

On notera que le décalage intervient indifféremment entre deux trames d'une même image, comme cela est représenté, ou entre deux trames appartenant à deux images successives.

On notera également que le décalage de deux lignes prévu selon l'invention n'est nullement gênant pour l'affichage des images sur le téléviseur. En effet, les normes de télévision couleur prévoient généralement que le retour trame s'effectue hors de la partie visible de l'image sur le téléviseur, le nombre de lignes de balayage étant nettement supérieur au nombre de lignes de cette partie visible de l'image. La partie visible de l'image représente, généralement, 580 lignes sur 625 selon les normes PAL et SECAM, et 485 lignes sur 525 selon la norme NTSC.

On notera en outre que le retard éventuel (figure 3D) de quelques lignes apporté à une trame n'est pas perceptible. En effet, la rémanence de l'écran est très nettement suffisante dans la mesure où elle est supérieure à la durée d'une trame pour permettre l'affichage entrelacé.

Une période de deux lignes prévue est largement suffisante pour compenser les écarts possibles entre les horloges H1 et H2'. En effet, ces deux horloges sont générées à partir de quartz dont les fréquences nominales sont identiques. Les écarts possibles entre ces fréquences sont généralement d'environ 50.10⁻⁶ PPM (points par million). Dans le pire des cas, cela revient à ajouter ou à retirer deux lignes toutes les 100 à 120 trames de balayage, c'est-à-dire toutes les 5 à 6 secondes.

La transmission du signal T indicateur de l'état de la mémoire tampon au circuit 14 est, par exemple, effectuée par une liaison filaire ou en utilisant un bus de contrôle commun (non représenté) aux circuits 13 et 14 et généralement prévu dans tout circuit de conversion.

Selon l'invention, le générateur 10 des signaux de synchronisation horizontale et verticale est modifié, par rapport à un circuit classique pour fixer, sous commande du signal T, la durée d'une trame. Un générateur de signaux de synchronisation comporte généralement un compteur synchrone à base de bascules D utilisées en diviseur par deux. Les sorties du compteur sont combinées au sein d'un bloc de décodage dont une sortie déclenche le front descendant du signal V. Selon l'invention, on prévoit des combinaisons logiques supplémentaires pour obtenir des déclenchements retardés ou avancés du front descendant du signal V, la sélection de la combinaison utilisée s'effectuant sur la base du signal T.

Un avantage de la présente invention est qu'elle supprime le recours à la boucle d'asservissement 6 (figure 1) qui inclut, dans les circuits classiques, un oscillateur commandé en tension (VCO), un filtre de boucle, et un signal de contrôle du VCO. Cette boucle d'asservissement est, selon l'invention, remplacée par un simple transfert d'informations par bus ou par fil entre le circuit de décompression 13 et le circuit d'encodage 14.

Un autre avantage de la présente invention est que la sous-porteuse de chrominance contenue dans le signal vidéo composite est générée à partir d'une fréquence fixe.

Bien entendu, la présente invention est susceptible de diverses variantes et modifications qui apparaîtront à l'homme de l'art. En particulier, le nombre de lignes de décalage indiqué à titre d'exemple pourra être modifié en fonction des tolérances de variation en fréquence des oscillateurs utilisés, pourvu que ce nombre de lignes soit tel que le décalage soit toujours situé hors de la partie visible de l'image sur le téléviseur. De plus, la mise en oeuvre pratique du procédé selon l'invention et la réalisation pratique du générateur 10 sont à la portée de l'homme de l'art en fonction des indications fonctionnelles données ci-dessus.

## Revendications

1. Procédé de régulation en lecture de zones mémoire (7) d'un circuit (13) de décompression d'un flux de données vidéo compressé selon une norme MPEG, par rapport au débit d'écriture dudit flux de données compressées dans lesdites zones mémoire (7), ledit circuit de décompression (13) délivrant un flux de données image (I) au rythme de signaux de synchronisation horizontale (H) et verticale (V) des images délivrées par un circuit (14) d'encodage selon une norme analogique de télévision couleur, **caractérisé en ce qu'**il consiste :
à générer un signal d'horloge (H2') de fréquence fixe destiné à la lecture desdites zones mémoire (7) et à la génération desdits signaux de synchronisation horizontale (H) et verticale (V) ; et
à décaler l'apparition d'un front déclencheur dudit signal de synchronisation verticale (V) sur la base d'un signal (T) indicateur de l'état de remplissage d'une mémoire tampon (8) associée auxdites zones mémoire (7).

2. Procédé de régulation selon la revendication 1, **caractérisé en ce que** ledit décalage correspond à un multiple pair de la période dudit signal de synchronisation horizontale (H).

3. Procédé selon la revendication 2, **caractérisé en ce que** ledit décalage correspond à deux périodes dudit signal de synchronisation horizontale (H).

4. Procédé selon l'une quelconque des revendications 1 à 3, **caractérisé en ce qu'**il consiste à retarder ledit signal de synchronisation verticale (V) lorsque ledit signal (T) indicateur de l'état de la mémoire tampon (8) signale que cette dernière est vide, et à avancer ledit signal de synchronisation verticale (V) lorsque ledit signal (T) indicateur de l'état de la mémoire tampon (8) indique que cette dernière est pleine.

5. Circuit de conversion de signaux de télévision numériques compressés selon une norme MPEG en signaux vidéo analogiques normalisés (PAL, SECAM, NTSC), comportant :
un circuit de décompression MPEG (13) recevant un flux de données numériques au rythme d'un premier signal d'horloge (H1) asservi sur le débit desdits signaux numériques et comportant des zones mémoire (7) alternativement affectées en lecture et en écriture et associées à une mémoire tampon (8) ; et
un circuit (14) d'encodage d'un flux de données numériques délivré par ledit circuit de décompression (13) au rythme de signaux de synchronisation horizontale (H) et verticale (V) d'un balayage d'écran de téléviseur,
**caractérisé en ce qu'**il comporte :
des moyens pour générer un deuxième signal d'horloge (H2') de fréquence fixe constituant une horloge de lecture desdites zones mémoire (7) et une horloge de référence pour un générateur (10) desdits signaux de synchronisation (H, V) ; et
des moyens pour décaler l'apparition d'un front déclencheur dudit signal de synchronisation verticale (V) sur la base de l'état d'un signal (T) indicateur du taux de remplissage de ladite mémoire tampon (8).

6. Circuit de conversion selon la revendication 5, **caractérisé en ce que** ledit deuxième signal d'horloge (H2') est fourni par un oscillateur (16) à quartz dont la fréquence nominale est la même que celle d'un quartz servant à générer ledit premier signal d'horloge (H1).

7. Circuit de conversion selon la revendication 5 ou 6, **caractérisé en ce que** ledit générateur de signaux de synchronisation (10) comporte des moyens pour décaler l'apparition d'un signal de synchronisation verticale (V) d'un nombre pair de périodes du signal de synchronisation horizontale (H).

8. Circuit de conversion selon la revendication 7, **caractérisé en ce que** ladite période de décalage du signal de synchronisation verticale (V) correspond au double de la période du signal de synchronisation horizontale (H).

## Claims

1. A method for regulating, in the read mode, memory areas (7) of a circuit (13) for decompressing a video data flow compressed according to an MPEG standard, with respect to the writing rate of the compressed data flow into the memory areas (7), the decompression circuit (13) issuing a flow of image data (I) at the rate of signals for horizontally (H) and vertically (V) synchronizing the images issued by a circuit (14) for coding according to an analog color television standard, **characterized in that** it consists of:
generating a clock signal (H2') having a fixed frequency for reading from the memory areas (7) and for generating the horizontal (H) and vertical (V) synchronization signals; and
shifting the occurrence of an edge triggering the vertical synchronization signal (V) based on a signal (T) indicative of the filling state of a buffer memory (8) associated with the memory areas (7).

2. A regulation method according to claim 1,
**characterized in that** the shifting corresponds to an even multiple of the period of the horizontal synchronization signal (H).

3. A regulation method according to claim 2,
**characterized in that** the shifting corresponds to two periods of the horizontal synchronization signal (H).

4. A method according to any of claims 1 to 3,
**characterized in that** it consists of delaying the vertical synchronization signal (V) when the signal (T) indicative of the state of the buffer memory (8) indicates that this memory is empty, and advancing the vertical synchronization signal (V) when the signal (T) indicative of the state of the buffer memory (8) indicates that this memory is full.

5. A circuit for converting digital television signals compressed according to an MPEG standard into analog standardized video signals (PAL, SECAM, NTSC), including:
an MPEG decompression circuit (13) receiving a flow of digital data at the rate of a first clock signal (H1) controlled by the flow rate of the digital signals and including memory areas (7) alternatively assigned to the read or write mode and associated with a buffer memory (8); and
a circuit (14) for coding a flow of digital data issued by the decompression circuit (13) at the rate of horizontal (H) and vertical (V) synchronization signals of a scanning of a television screen,
**characterized in that** it includes:
means for generating a second clock signal (H2') having a fixed frequency constituting a clock for reading from the memory areas (7) and a reference clock for a generator (10) of the synchronization signals (H, V); and
means for shifting the occurrence of a triggering edge of said vertical synchronization signal (V) based on the state of a signal (T) indicative of the filling rate of the buffer memory (8).

6. A conversion circuit according to claim 5,
**characterized in that** the second clock signal (H2') is supplied by a quartz oscillator (16), the nominal frequency of which is the same as that of a quartz used for generating the first clock signal (H1).

7. A conversion circuit according to claim 5 or 6,
**characterized in that** the synchronization signal generator (10) includes means for shifting the occurrence of a vertical synchronization signal (V) by an even number of periods of the horizontal synchronization signal (H).

8. A conversion circuit according to claim 7,
**characterized in that** said shifting period of the vertical synchronization signal (V) corresponds to twice the period of the horizontal synchronization signal (H).

## Patentansprüche

1. Regelungsverfahren im Lesemodus von Speicherzonen (7) einer Schaltung (13) zur Dekompression eines gemäß einer MPEG- Norm komprimierten Video-Datenflusses, bezüglich der Schreibgeschwindigkeit des genannten Flusses komprimierter Daten in die genannten Speicherzonen, wobei die genannte Dekompressionsschaltung (13) einen Bild-Datenfluß (I) abgibt im Takt von Horizontal (H)- und Vertikal (V)- Synchronisationssignalen der durch eine Schaltung (14) zum Kodieren gemäß einer analogen Farbfernseh-Norm gelieferten Bilder, **dadurch gekennzeichnet, daß** das Verfahren besteht in:
Erzeugen eines Taktsignals (H2') fester Frequenz zum Lesen der genannten Speicherzonen (7) und zum Erzeugen der Horizontal (H)-und Vertikal (V)- Synchronisationssignale, und
Verschieben des Auftretens einer Triggerflanke des genannten Vertikal-Synchronisiersignals auf der Grundlage eines Signals (T), das den Füllzustand eines den genannten Speicherzonen zugeordneten Pufferspeichers (8) anzeigt.

2. Regelverfahren nach Anspruch 1, **dadurch gekennzeichnet, daß** die genannte Verschiebung bzw. Versetzung einem geradzahligen Vielfachen der Periode des genannten Horizontal-Synchronisiersignals (H) entspricht.

3. Verfahren nach Anspruch 2, **dadurch gekennzeichnet, daß** die genannte Verschiebung bzw. Versetzung zwei Perioden des genannten Horizontal-Synchronisiersignals (H) entspricht.

4. Verfahren nach einem der Ansprüche 1 bis 3, **dadurch gekennzeichnet, daß** das Verfahren umfaßt
Verzögern des genannten Vertikal-Synchronisiersignals (V), wenn das genannte, den Zustand des Pufferspeichers (8) anzeigende Signal (T) signalisiert, daß dieser Pufferspeicher leer ist, sowie
sowie Vorschieben bzw. Voreilen des genannten Vertikal-Synchronisiersignals (V), wenn das genannte, den Zustand des Pufferspeichers (8) anzeigende Signal (T) anzeigt, daß dieser Pufferspeicher voll ist.

5. Schaltung zur Umwandlung von gemäß einer MPEG-Norm komprimierten digitalen Fernsehsignalen in standardisierte analoge Fernsehsignale (PAL, SECAM, NTSC), wobei die Schaltung umfaßt:
eine Schaltung (13) zur MPEG-Dekompression, welche einen digitalen Datenfluß im Takt eines von der Flußrate bzw. - geschwindigkeit der genannten digitalen Signale gesteuerten Taktsignals (H1) empfängt und Speicherzonen (7) aufweist, welche abwechselnd im Lese- und Schreib- Mode betrieben werden und eienm Pufferspeicher (8) zugeordnet sind; sowie
eine Schaltung (14) zur Kodierung eines digitalen Datenflusses, der von der genannten Dekompressions-Schaltung (13) im Takt von Horizontal (H)- und Vertikal (V)-Synchronisiersignalen einer Fernseh-Bildschirmabtastung geliefert wird,
**dadurch gekennzeichnet, daß** die Umwandlungsschaltung umfaßt:
Mittel zur Erzeugung eines zweiten Taktsignals (H2') fester Frequenz, das einen Takt für das Lesen der genannten Speicherzonen (7) und einen Referenz- bzw. Bezugstakt für einen Generator (10) der genannten Synchronisiersignale (H, V) bildet, sowie
Mittel zum Verschieben bzw. Versetzen des Auftretens einer Triggerflanke des genannten Vertikal-Synchronisiersignals (V) auf der Grundlage des Zustands eines den Füllgrad des genannten Pufferspeichers (8) anzeigenden Signals (T).

6. Umwandlungsschaltung nach Anspruch 5, **dadurch gekennzeichnet, daß** das genannte zweite Taktsignal (H2') von einem Quarzoszillator (16) geliefert wird, dessen Nominal-Frequenz dieselbe wie die eines zur Erzeugung des genannten ersten Taktsignals (H1) dienenden Quarzes ist.

7. Umwandlungsschaltung nach Anspruch 5 oder 6, **dadurch gekennzeichnet, daß** der genannte Synchronisiersignal-Generator (10) Mittel zum Verschieben bzw. Versetzen des Auftretens eines Vertikal-Synchronisiersignals (V) um eine geradzahlige Anzahl von Perioden des Horizontal-Synchronisiersignals (H) aufweist.

8. Umwandlungsschaltung nach Anspruch 7, **dadurch gekennzeichnet, daß** die genannte Periode der Verschiebung bzw. Versetzung des Vertikal-Synchronisiersignals (V) dem Doppelten der Periode des Horizontal-Synchronisiersignals (H) entspricht.
